(19) Europäisches Patentamt

European Patent Office

Office européen des brevets

(11) **EP 1 284 351 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(51) Int Cl.:
*F02D 41/02* *(2006.01)*    *F02D 41/14* *(2006.01)*

(21) Anmeldenummer: **02015987.7**

(22) Anmeldetag: **18.07.2002**

(54) **Verfahren und Vorrichtung zur Regelung der Gemischzuammensetzung für einen Ottomotor mit NOx-Speicherkatalysator während einer Regenerationsphase**

Method and apparatur for controling the fuel mixture composition of a spark ignition engine with NOx storage catalyst during regeneration cycle

Procédé et dispositif de réglage de la composition du mélange d'un moteur à allumage comandé avec un catalyseur à accumulateur de NOx pendant le cycle de régénération

(84) Benannte Vertragsstaaten:
**DE FR GB IT**

(30) Priorität: **16.08.2001 DE 10139992**

(43) Veröffentlichungstag der Anmeldung:
**19.02.2003 Patentblatt 2003/08**

(73) Patentinhaber:
 • **Dr.Ing. h.c.F. Porsche Aktiengesellschaft**
   **70435 Stuttgart (DE)**
 • **AUDI AG**
   **85045 Ingolstadt (DE)**
 • **Bayerische Motoren Werke Aktiengesellschaft**
   **80788 München (DE)**
 • **DaimlerChrysler AG**
   **70546 Stuttgart (DE)**
 • **Volkswagen AG**
   **38436 Wolfsburg (DE)**

(72) Erfinder:
 • **Huynh, Ngoc-Hoa**
   **71229 Leonberg (DE)**
 • **Salzer, Lorenz**
   **71292 Friolzheim (DE)**
 • **Schmeling, Ulf-Peter**
   **71277 Rutesheim (DE)**
 • **Gerl, Peter**
   **73732 Esslingen (DE)**

(56) Entgegenhaltungen:
 **EP-A- 0 884 458**      **WO-A-98/55742**
 **US-A- 5 771 685**

EP 1 284 351 B1

**EP 1 284 351 B1**

**Beschreibung**

Die vorliegende Erfindung betrifft ein Verfahren und eine Vorrichtung zur Regelung der Gemischzusammensetzung für einen Ottomotor mit $NO_x$-Speicherkatalysator während einer Regenerationsphase.

Die Schadstoffemission von Ottomotoren kann durch eine katalytische Nachbehandlung wirksam vermindert werden. Dabei geht es im Wesentlichen darum, schädliche Bestandteile aus dem Abgas zu entfernen. Ein Katalysator fördert die Nachverbrennung von reaktiven CO und HC zu ungefährlichem Kohlendioxid ($CO_2$) und Wasser ($H_2O$) und reduziert gleichzeitig im Abgas vorkommende Stickoxide ($NO_x$) zu neutralem Stickstoff (N2).

Üblich ist beispielsweise der Dreiwege-Katalysator, der alle drei Schadstoffe CO, HC und $NO_x$ gleichzeitig abbaut. Er hat ein Röhrengerüst aus einer Keramik, die mit Edelmetallen, vorzugsweise mit Platin und Rhodium beschichtet ist, wobei letztere den chemischen Abbau der Schadstoffe beschleunigen.

Das katalytische Dreiwege-Verfahren setzt voraus, daß das Gemisch stöchiometrisch zusammengesetzt ist. Eine stöchiometrische Gemischzusammensetzung ist durch eine Luftzahl $\lambda = 1,00$ charakterisiert. Bei dieser Gemischzusammensetzung arbeitet der Katalysator mit einem sehr hohen Wirkungsgrad. Schon eine Abweichung von nur einem Prozent beeinträchtigt die Wirksamkeit der Schadstoffumsetzung erheblich.

Die bekannte $\lambda$-Sonde liefert zur Verwendung bei der Gemischregelung ein Signal über die augenblickliche Gemischzusammensetzung an das Steuergerät. Die $\lambda$-Sonde ist im Abgasrohr des Motors an einer Stelle eingebaut, an der über den gesamten Betriebsbereich des Motors die für die Funktion des Systems nötige Abgashomogenität vorhanden ist.

Aus Verbrauchsgründen ist es wünschenswert, fremdgezündete Ottomotoren ähnlich wie Dieselmotoren bei möglichst vielen Betriebszuständen mit Luftüberschuß, also mager ($\lambda > 1$), zu betreiben, um so die Drosselverluste beim Ladungswechsel zu vermindern. Die erreichbaren $\lambda$-Werte sind vom Gemischaufbereitungskonzept des Grundmotors abhängig und können bei Schichtlademotoren oder Direkteinspritzern bis zum sechsfachen Luftüberschuß ($\lambda = 6$) reichen.

In dieser mageren Betriebsart sind die bekannten Dreiwege-Katalysatoren jedoch nutzlos, da sie ein stöchiometrisches ($\lambda = 1$) Gemisch und Abgas benötigen, um die Stickoxide ($NO_x$) umzuwandeln.

Als Problemlösung sind $NO_x$-Speicherkatalysatoren denkbar, die während des Magerbetriebs $NO_x$ aus dem Abgas entfernen, indem sie es speichern. Regenerationsphasen werden künstlich durch die Motorsteuerung erzeugt, wenn beispielsweise der $NO_x$-Gehalt des Abgases hinter dem $NO_x$-Speicherkatalysator einen vorbestimmten Schwellwert überschreitet. Die Regeneration wird üblicherweise durch eine Einstellung des $\lambda$-Wertes der Hauptverbrennung ($\lambda_M$) von einem mageren Wert auf einen fetten Wert kleiner als 1, z.B. 0,76, begonnen. Sie wird dann beendet, wenn wenn eine vorbestimmte Zeitspanne der Fettphase vorüber ist. In diesem Augenblick wird das Gemisch also wieder mager eingestellt.

Es sind eine große Anzahl von Veröffentlichungen bekannt, die sich mit der Problematik der $NO_x$ - Speicherung und der Regeneration des $NO_x$ - Speicherkatalysators auseinandersetzen. Die Aufgabenstellung für die Motorsteuerung beinhaltet zwei Punkte: Erstens ist der Beladungszustand des Katalysators zu erfassen, zweitens ist in der $NO_x$ Regenerationsphase die Bereitstellung von Reduktionsmittel exakt auf den Bedarf abzustimmen, da sich das Reduktionsmittel ebenfalls aus testrelevanten Schadstoffen zusammensetzt. Darüber hinaus soll der Umschaltvorgang zwischen Mager- und Fettphase für den Fahrer nicht wahrnehmbar sein. Die bekannten Verfahren operieren ausnahmslos mit zeitlich gesteuerten Strategien einer Fett-Mager-Umschaltung, deren Tastverhältnis mehr oder weniger aufwendig durch Erfassung der anfallenden $NO_x$ - Masse bestimmt wird. Auch sind Strategien bekannt, die mit Hilfe eines $NO_x$ - Sensors den Durchbruch des Speichers anmessen und bei Bedarf eine Regeneration auslösen. Von den $NO_x$ - Sensoren ist weiterhin bekannt, daß sie eine erhebliche Querempfindlichkeit zu $NH_3$ aufweisen, so daß sie die korrekte $NO_x$ - Konzentration nur bei stöchiometrischer und überstöchiometrischer ($\lambda \geq 1$; $NH_3$-freier) Abgaszusammensetzung angeben können.

Die bekannten Verfahren bedingen einen erheblichen Abstimmungsaufwand, besonders bei der Berücksichtigung unterschiedlicher Lastzustände. Das Alterungsverhalten und der Grad der Schwefelvergiftung des $NO_x$-Speicherkatalysators sind nur mit erheblichem steuertechnischen Aufwand und keineswegs zuverlässig zu beherrschen. Mit anderen Worten ändert sich die Verarbeitungsgeschwindigkeit während des Regenerationsvorgangs, da sie vom Alterungs- und S-Vergiftungszustand abhängig ist. Fest vorgegebene Dauer und unveränderliches $\lambda_M$ während der Regeneration führen somit bei gealterten oder vergifteten $NO_x$-Speicherkatalysatoren unweigerlich zu signifikanter Erhöhung der CO- und HC-Emissionen.

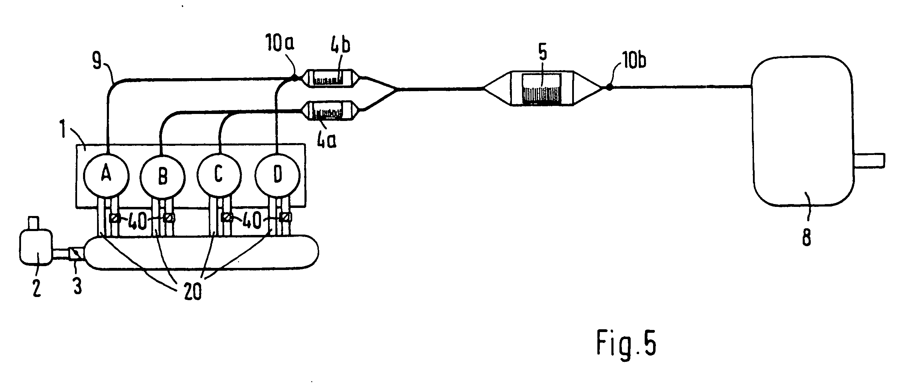

Fig. 5 zeigt eine schematische Darstellung eines bekannten direkteinspritzenden Ottomotors mit $NO_x$-Speicherkatalysator.

In Fig. 5 bezeichnen 1 eine Brennkraftmaschine mit vier Zylindern A bis D, 2 einen Luftfilter, 3 eine Drosselklappe, 20 Ansaugleitungen und 40 Drallklappen zur Turbulenzerzeugung für die jeweiligen Zylinder A bis D, 9 eine Abgasleitung, 4a/4b einen jeweiligen Dreiwege-Vorkatalysator für die Zylindergruppe B, C bzw. A, D, 5 einen $NO_x$-Speicherkatalysator, 10a einen $\lambda_M$-Sensor, 10b einen $\lambda_K$-/$NO_x$-Sensor sowie 8 einen Nachschalldämpfer.

2

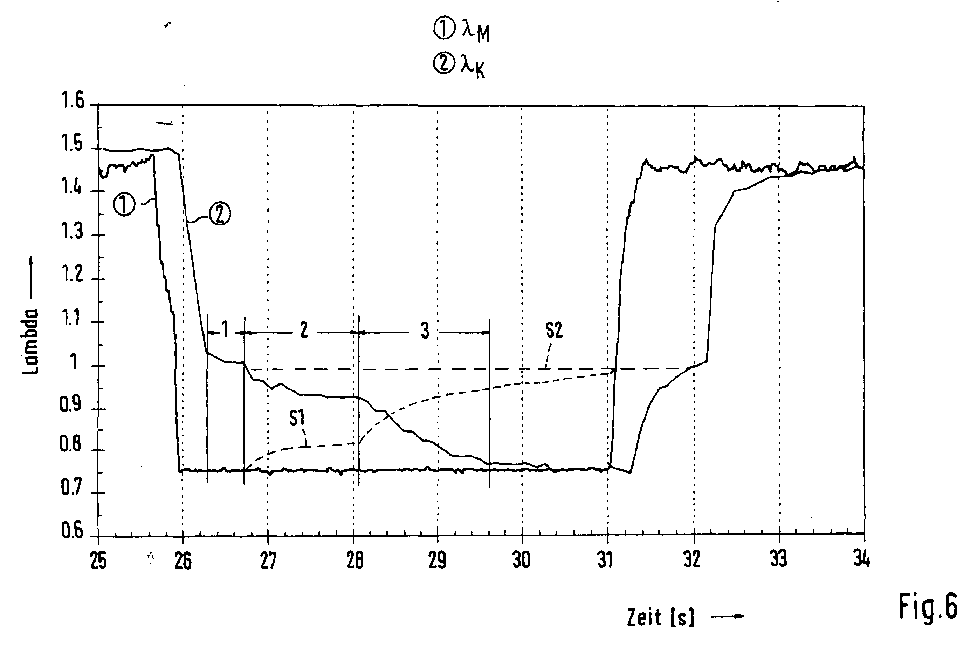

Fig. 6 ein Zeitablaufdiagramm der $\lambda$ - Werte $\lambda_M$ vor dem $NO_x$-Speicherkatalysator und $\lambda_K$ nach dem $NO_x$-Speicherkatalysator bei einer Regenerationsphase des $NO_x$-Speicherkatalysators vom Ottomotor nach Fig. 5.

Wie aus Fig. 6 ersichtlich, wird der $\lambda_M$-Wert zu einer vorgegebenen Zeit abrupt von einem mageren Wert von 1,45 auf einen fetten Wert von 0,76 geändert. Insgesamt dauert die Regenerationsphase nach Fig. 6 fünf Sekunden, wonach der $\lambda_M$-Wert wieder auf den ursprünglichen mageren Wert von 1,45 zurückgestellt wird.

Hinsichtlich des Verlaufs des $\lambda_K$-Werts hinter dem $NO_x$-Speicherkatalysator lassen sich drei verschiedene Phasen erkennen. In Phase 1 erfolgt eine vollständige Umsetzung des angebotenen Reduktionsmittels (CO, HC), weshalb der Wert von $\lambda_K$ knapp oberhalb von 1 liegt. In Phase 2 erfolgt eine verlangsamte Umsetzung des angebotenen Reduktionsmittels und damit ein Durchbruch von HC und CO. In dieser Phase 2 fällt der Wert von $\lambda_K$ leicht unter den stöchiometrischen Wert ab, und zwar im gezeigten Beispiel auf etwa 0,92. In Phase 3 erfolgt ein Abklingen der Umsetzung des angebotenen Reduktionsmittels verbunden mit einem Abfall des $\lambda_K$-Wertes auf den $\lambda_M$-Wert. Entsprechend nimmt in dieser Phase der abgasschädliche HC/CO-Durchbruch stark zu.

Der vorliegenden Erfindung liegt die Erkenntnis zugrunde, daß ein ein $\lambda_K$-Verlauf wünschenswert wäre, wie er in Fig. 6 mit der gestrichelten Linie S2 bezeichnet ist und etwa konstant bei $\lambda_K$ ungefähr gleich 1 bis zur Ende der Regenerationsphase verläuft. Ein entsprechender Verlauf des $\lambda_M$-Wertes ist in Fig. 6 durch die strichpunktierte Linie S1 dargestellt. Mit anderen Worten, müßte dafür gesorgt werden, dass der $\lambda_M$-Wert vor dem $NO_x$-Speicherkatalysator mit Einsetzen der verlangsamten Umsetzung des angebotenen Reduktionsmittels angehoben wird, um dem HC/CO-Durchschlag und der damit verbundenen Absenkung des $\lambda_K$-Wertes entgegenzuwirken.

Eine Aufgabe der vorliegenden Erfindung liegt daher darin, ein Verfahren und eine Vorrichtung zur Regelung der Gemischzusammensetzung für einen Ottomotor mit $NO_x$-Speicherkatalysator während einer Regenerationsphase zu schaffen, welche auch bei gealterten oder vergifteten $NO_x$-Speicherkatalysatoren keine Erhöhten CO- und HC-Emissionen mit sich bringen.

Das erfindungsgemäße Verfahren zur Regelung der Gemischzusammensetzung für einen Ottomotor mit $NO_x$-Speicherkatalysator während einer Regenerationsphase gemäß Anspruch 1 bzw. die entsprechende Vorrichtung nach Anspruch 8 weisen den Vorteil auf, daß sich ein erfindungsgemäß gestaltetes bzw. betriebenes System den Eigenschaften verschiedener Katalysatorbeschichtungen oder verschiedenen Alterungs- oder Schwefelvergiftungszuständen automatisch anpasst. Aus dem Regelverhalten lassen sich zudem Rückschlüsse auf den Zustand des Speicherkatalysators ziehen, so daß daraus Informationen zum Schwefelregenerationsbedarf oder zu Diagnosezwecken ableitbar sind.

Die der vorliegenden Erfindung zugrundeliegende Idee besteht darin, daß der $\lambda_M$-Wert des dem $NO_x$-Speicherkatalysator zugeführten Abgases im Verlauf der Regenerationsphase in Abhängigkeit von dem $\lambda_K$-Wert des vom $NO_x$-Speicherkatalysator ausgestoßenen Abgases in einem geschlossenen Regelkreis in Richtung eines Wertes von Eins zurückgeregelt wird. Die Regelung in Richtung des Wertes von Eins setzt bevorzugt erst ab einem vorbestimmten Interventionswert $\lambda_i$ ein.

Die Erfindung sieht vorzugsweise die Benutzung eines handelsüblichen $NO_x$ - Sensors stromab des $NO_x$-Speicherkatalysator vor, der neben der $NO_x$-Konzentration auch das $\lambda_K$ des Abgases mißt. Die Erfindung macht sich den Umstand zu Nutze, daß das $\lambda_K$ nach dem $NO_x$-Speicherkatalysator bei Anfettung unabhängig vom $\lambda_M$ vor dem $NO_x$-Speicherkatalysator genau so lange stöchiometrisch (=1) oder überstöchiometrisch (>1) bleibt, wie der $NO_x$-Speicherkatalysator das angebotene Reduktionsmittel (CO, HC) vollständig verarbeiten kann.

In den Unteransprüchen finden sich vorteilhafte Weiterbildungen und Verbesserungen des jeweiligen Gegenstandes der Erfindung.

Gemäß einer bevorzugten Weiterbildung ist die Regelung derart eingerichtet, daß der $\lambda_K$-Wert des vom $NO_x$-Speicherkatalysator ausgestoßenen Abgases einen Wert von Eins nicht oder nur unwesentlich unterschreitet.

Gemäß einer weiteren bevorzugten Weiterbildung wird die Regenerationsphase eingeleitet, wenn der $NO_x$-Gehalt des vom $NO_x$-Speicherkatalysator ausgestoßenen Abgases einen vorbestimmten Wert überschreitet.

Gemäß einer weiteren bevorzugten Weiterbildung wird die Regenerationsphase beendet, wenn das Signal eines dem $NO_x$-Speicherkatalysator nachgeschalteten $NO_x$-Sensors und/oder dessen Steigung einen vorbestimmten Wert überschreitet. Vorteilhafterweise kann dabei die $NH_3$-Querempfindlichkeit eines $NO_x$-Sensors stromab des $NO_x$-Speicherkatalysator genutzt werden, die den Abschluss der Speicherregeneration beträchtlich vor dem $\lambda_K$-Signal ankündigt. Es ist sinnvoll, das Ende der Regeneration nicht nur über Schwellwert des $NO_x$-Signals ($NH_3$-Signal), sondern auch dessen Steigung zu detektieren.

Gemäß einer weiteren bevorzugten Weiterbildung wird die Regenerationsphase beendet, wenn der $\lambda_K$-Wert des vom $NO_x$-Speicherkatalysator ausgestoßenen Abgases einen vorbestimmten Wert unterschreitet. Dieser Ansatz ist wegen einer langen Gaslaufzeit zwischen Brennraum (Reduktionsmittelerzeugung) und Messort (stromab $NO_x$-Speicherkatalysator) allerdings weniger effektiv.

Gemäß einer weiteren bevorzugten Weiterbildung wird der $\lambda_M$-Wert des dem $NO_x$-Speicherkatalysator zugeführten Abgases am Beginn der Regenerationsphase auf einen konstanten Vorsteuerwert $\lambda_{REG}$ geregelt und die Regelung in Richtung des Wertes von Eins erst begonnen wird, wenn der $\lambda_K$-Wert des vom $NO_x$-Speicherkatalysator

ausgestoßenen Abgases einen vorbestimmten Interventionswert $\lambda_i$ unterschreitet. Es hat sich als günstig herausgestellt, zum Regeln der Gemischzusammensetzung das Signal der motornahen $\lambda$ - Sonde mit einem der Regenerationsaufgabe angepasstem Vorsteuerwert $0.76 < \lambda_{REG} < 1$ zu verwenden, um die erforderliche Regelgeschwindigkeit und Genauigkeit sicherzustellen. Im weiteren Regenerationsverlauf wird der $\lambda_M$-Wert entsprechend dem Regenerationsfortschritt durch einen vorgegebenen festen oder adaptiven Algorithmus modifiziert.

Gemäß einer weiteren bevorzugten Weiterbildung der konstante Vorsteuerwert $\lambda_{REG}$ dadurch erhalten, daß eine vorbestimmte Nacheinspritzung durchgeführt wird und der $\lambda$-Wert der Hauptverbrennung derart geregelt wird, daß der $\lambda_M$-Wert des dem $NO_x$-Speicherkatalysator zugeführten Abgases den konstanten Vorsteuerwert $\lambda_{REG}$ annimmt.

Die Bereitstellung des erforderlichen Reduktionsmittels kann sowohl durch Überfetten der zur Leistungserzeugung der Verbrennungsmaschine genutzten Verbrennung (Hauptverbrennung), als auch durch Nacheinspritzen erfolgen. Bei Reduktionsmittelzugabe mittels überfetteter Hauptverbrennung ($0.76 < \lambda_M < 1.0$) wird bevorzugt CO, bei Reduktionsmittelzugabe mittels Nacheinspritzung bevorzugt HC als Reduktionsmittel erzeugt. Bei bevorzugtem Einsatz von CO als Reduktionsmittel entsteht in Phase 1 der Regeneration ein unerwünschter Durchbruch von $NO_x$, der überwiegend aus NO (Stickmonoxid) besteht.

Bei bevorzugtem HC-Einsatz in dieser Phase 1 entsteht dieser $NO_x$-Durchbruch nicht oder zumindest erheblich vermindert. Die Ursache liegt in der Konkurrenzsituation, die während Phase 1 zwischen $NO_x$-Speicher und $O_2$-Speichern der Katalysatoren besteht. Erst wenn die $O_2$-Speicher geleert sind kann CO $NO_x$ zuverlässig bis zu $N_2$ reduzieren. Diese Ausführungsform schlägt deshalb vor, während Phase 1 der Regeneration den HC-Gehalt des Abgases mittels Nacheinspritzung auf z.B. einen Wert > 3000 ppm vor dem $NO_x$-Speicherkatalysator einzustellen und die Phasen 2 und 3 durch Anfetten der Hauptverbrennung zu regenerieren und dabei den $\lambda$-Wert der Hauptverbrennung zu regeln. Das ist deshalb vorteilhaft, da hohe HC-Konzentrationen bei fortschreitender Regeneration nicht mehr umgesetzt werden und zu HC-Durchbrüchen führen.

Gemäß einer weiteren bevorzugten Weiterbildung regelt die Regelung den $\lambda$-Wert des dem $NO_x$-Speicherkatalysator zugeführten Abgases nach folgender Beziehung:

$$\lambda_M = \lambda_{REG} + k^*(\lambda_i - \lambda_K)$$

wobei k eine Konstante, $\lambda_M$ der $\lambda$-Wert der Hauptverbrennung und $\lambda_K$ der $\lambda$-Wert des vom $NO_x$-Speicherkatalysator ausgestoßenen Abgases sind.

Ausführungsbeispiele der Erfindung sind in den Zeichnungen dargestellt und in der nachfolgenden Beschreibung näher erläutert.

Es zeigen:

Fig. 1  ein Zeitablaufdiagramm der $\lambda$ - Werte $\lambda_M$ vor dem $NO_x$-Speicherkatalysator und $\lambda_K$ nach dem $NO_x$-Speicherkatalysator sowie des Signals des $NO_x$-Sensors 10b bei einer Regenerationsphase des $NO_x$-Speicherkatalysators vom Ottomotor nach Fig. 5 zur Erläuterung einer Ausführungsform des erfindungsgemäßen Verfahrens;

Fig. 2  ein Zeitablaufdiagramm der $\lambda$ - Werte $\lambda_M$ vor dem $NO_x$-Speicherkatalysator und $\lambda_K$ nach dem $NO_x$-Speicherkatalysator bei einer Regenerationsphase des $NO_x$-Speicherkatalysators vom Ottomotor nach Fig. 5 zur Erläuterung einer weiteren Ausführungsform des erfindungsgemäßen Verfahrens;

Fig. 3  eine Illustration zur Erläuterung einer Regeneration mit der Hauptverbrennung;

Fig. 4  eine Illustration zur Erläuterung einer Regeneration mit einer Nacheinspritzung;

Fig. 5  eine schematische Darstellung eines bekannten direkteinspritzenden Ottomotors mit $NO_x$-Speicherkatalysator; und

Fig. 6  ein Zeitablaufdiagramm der $\lambda$ - Werte $\lambda_M$ vor dem $NO_x$-Speicherkatalysator und $\lambda_K$ nach dem $NO_x$-Speicherkatalysator bei einer Regenerationsphase des $NO_x$-Speicherkatalysators vom Ottomotor nach Fig. 5.

In den Figuren bezeichnen gleiche Bezugszeichen gleiche oder funktionsgleiche Elemente.

Ohne Beschränkung der Allgemeinheit wird die vorliegende Erfindung nachstehend anhand eines direkteinspritzenden Ottomotors mit $NO_x$-Speicherkatalysator erläutert, wie oben im Zusammenhang mit Fig. 5 näher beschrieben.

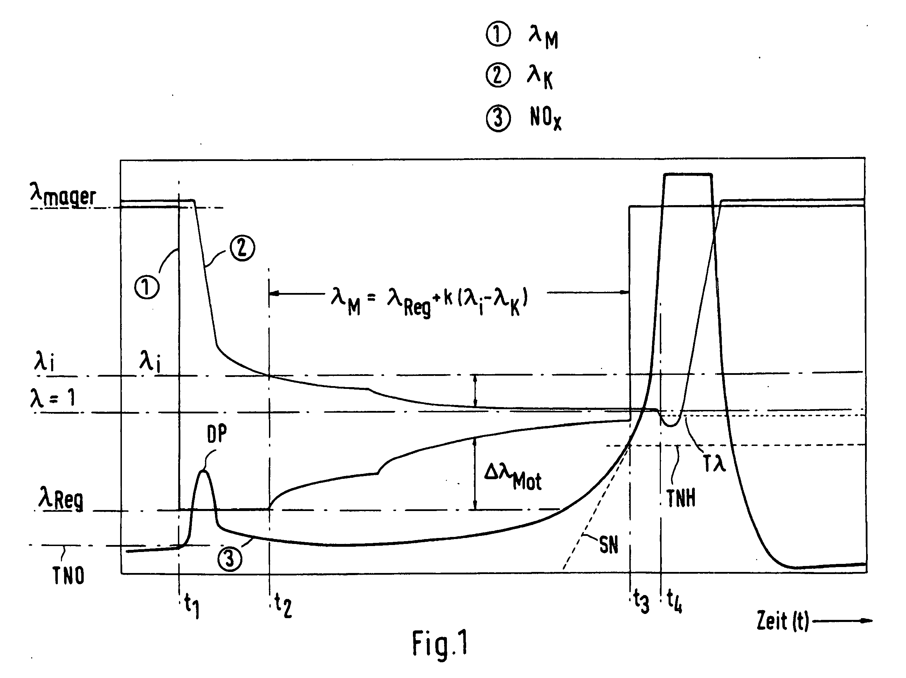

Fig. 1 ist ein Zeitablaufdiagramm der $\lambda$ - Werte $\lambda_M$ vor dem $NO_x$-Speicherkatalysator und $\lambda_K$ nach dem $NO_x$-Spei-

cherkatalysator sowie des Signals des $NO_x$-Sensors 10b bei einer Regenerationsphase des $NO_x$-Speicherkatalysators vom Ottomotor nach Fig. 5 zur Erläuterung einer Ausführungsform des erfindungsgemäßen Verfahrens.

Gemäß Figur 1 bewirkt das vom Sensor 10b erfaßte $NO_x$-Signal das Einsetzen der Regenerationsphase durch ein Überschreiten eines vorbestimmten Schwellenwerts TNO.

Dabei wird der $\lambda$-Wert $\lambda_M$ der Hauptverbrennung zum Zeitpunkt $t_1$ von einem mageren Wert $\lambda_{mager}$ (z.B. 6) abrupt auf einen fetten Vorsteuerwert $\lambda_{Reg}$ von beispielsweise 0,76 gesetzt und bis zum Zeitpunkt $t_2$ dort konstant gehalten.

Der $\lambda$-Wert $\lambda_K$ hinter dem $NO_x$-Speicherkatalysator 5, welcher mittels des Sensors 10b erfaßt wird, nimmt zwischen dem Zeitpunkt $t_1$ und dem Zeitpunkt $t_2$ auf einen Interventionswert $\lambda_i$ ab. Dieses Erreichen des Interventionswertes $\lambda_i$ bewirkt, daß der $\lambda$-Wert $\lambda_M$ der Hauptverbrennung entsprechend der Beziehung

$$\lambda_M = \lambda_{Reg} + k(\lambda_i - \lambda_K)$$

geregelt wird, wobei k eine Konstante, $\lambda_M$ der $\lambda$-Wert der Hauptverbrennung und $\lambda_K$ der $\lambda$-Wert des vom $NO_x$-Speicherkatalysator 5 ausgestoßenen Abgases ist. Dabei wird der Wert $\lambda_K$ ebenfalls vom Sensor 10b hinter dem $NO_x$-Speicherkatalysator 5 erfaßt.

Durch diese Regelung ergibt sich ein Anstieg des $\lambda$-Wertes $\lambda_M$ mit zunehmender Zeitdauer der Regenerationsphase. Diese abnehmende Anfettung hat zur Folge, daß der verlangsamten Umsetzung des angebotenen Reduktionsmittels (CO, HC) im $NO_x$-Speicherkatalysator 5 Rechnung getragen wird und eine Freisetzung ungewollter HCund CO-Emissionen entgegengewirkt wird.

Das vom Sensor 10b erfaßte $NO_x$-Signal zeigt nach Beginn der Regenerationsphase einen sogenannten Desorptionsspitzenwert DP, der daher rührt, daß durch das Anfetten der Hauptverbrennung bevorzugt CO als Reduktionsmittel in der Phase 1, d.h. bis zum Erreichen des Interventionswertes $\lambda_i$, eingesetzt wird. Nach Erreichen des Desorptionsspitzenwerts DP fällt das $NO_x$-Signal wieder stark ab. Erst am Ende der Regenerationsphase steigt das $NO_x$-Signal aufgrund der $NH_3$-Querempfindlichkeit des Sensors 10b wieder stark an und erreicht zum Zeitpunkt $t_3$ eine Steigung SN bei einem Wert TNH.

Bei Erreichen dieses Zeitpunkts $t_3$ wird der $\lambda$-Wert $\lambda_M$ der Hauptverbrennung wieder auf den Wert $\lambda_{mager}$ zurückgestellt, was die Regenerationsphase beendet. Eine weitere Möglichkeit, die Regenerationsphase zu beenden, wäre die Erfassung des Abfalls des $\lambda_K$-Wertes nach Beendigung der Regeneration, insbesondere das Festsetzen eines Schwellwertes $T\lambda$ für den $\lambda_K$-Wert, wie in Figur 1 ebenfalls angedeutet. Allerdings ist dies nicht sehr effektiv, wenn eine lange Gaslaufzeit zwischen dem Brennraum, also dem Raum der Reduktionsmittelerzeugung, und dem Messort des Sensors 10b stromab des $NO_x$-Speicherkatalysators 5 vorliegt.

Durch diese Art der Regelung des $\lambda_M$-Wertes gemäß der ersten Ausführungsform kann das System zur Regelung der Gemischtzusammensetzung während der Regenerationsphase automatisch an Alterungs- und/oder Schwefelvergiftungszustände angepaßt werden.

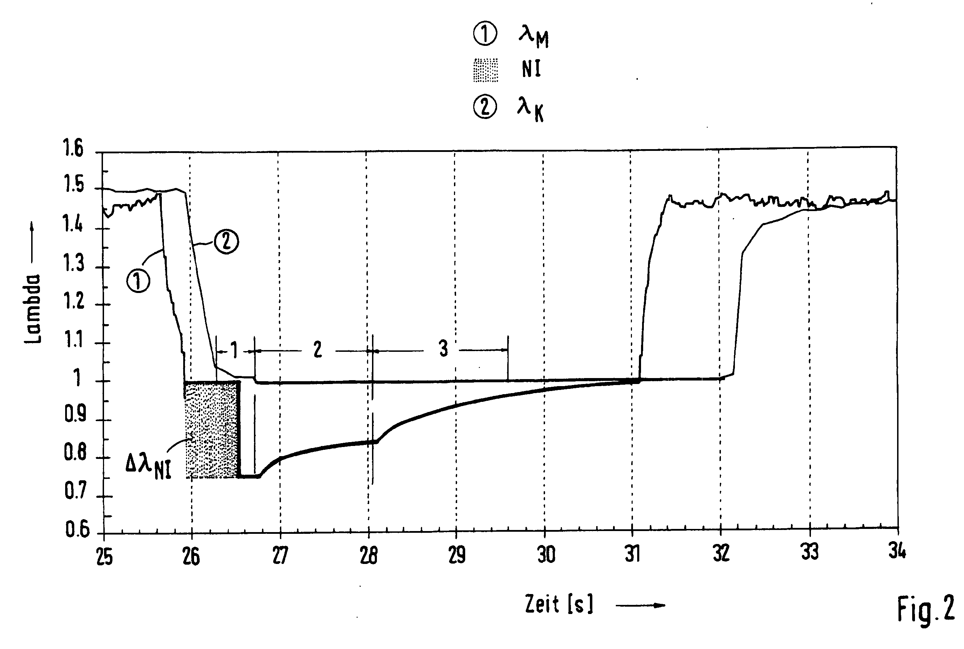

Fig. 2 ist ein Zeitablaufdiagramm der $\lambda$ - Werte $\lambda_M$ vor dem $NO_x$-Speicherkatalysator und $\lambda_K$ nach dem $NO_x$-Speicherkatalysator bei einer Regenerationsphase des $NO_x$-Speicherkatalysators vom Ottomotor nach Fig. 5 zur Erläuterung einer weiteren Ausführungsform des erfindungsgemäßen Verfahrens.

Bei der Ausführungsform gemäß Figur 2 erfolgt die Reduktionsmittelzugabe in der Phase 1 durch eine Nacheinspritzung NI. Mit anderen Worten wird der konstante Vorsteuerwert $\lambda_{REG}$ dadurch erhalten, daß die vorbestimmte Nacheinspritzung NI durchgeführt wird und der $\lambda$-Wert der Hauptverbrennung derart komplementär geregelt, daß der $\lambda_M$-Wert des dem $NO_x$-Speicherkatalysator 5 zugeführten Abgases den konstanten Vorsteuerwert $\lambda_{REG}$ annimmt, und zwar solange, bis der Interventionswert $\lambda_i$ durch $\lambda_K$ erreicht ist.

Dies hat den Vorteil, daß der unerwünschte $NO_x$-Durchbruch in der Phase 1, der zum Desorptionsspitzenwert DP gemäß Figur 1 führt, vermieden werden kann. Bei dieser Ausführungsform wird der Tatsache Rechnung getragen, daß CO erst dann $NO_x$ zuverlässig bis zu $N_2$ reduzieren kann, wenn die 02-Speicher geleert sind. Dieses Leeren der $O_2$-Speicher erfolgt durch vermehrte Zugabe von HC durch die Nacheinspritzung bei Beginn der Regenerationsphase.

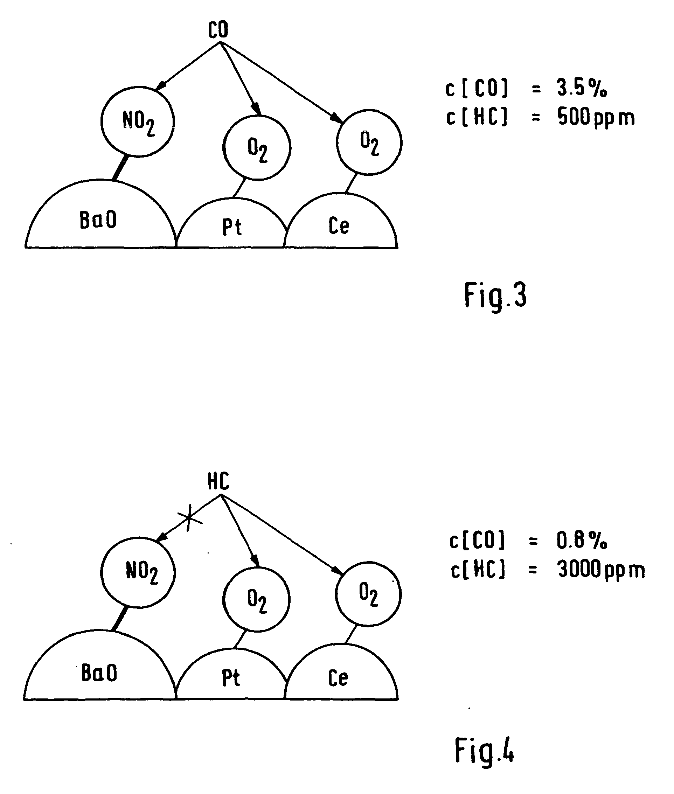

Fig. 3 ist eine Illustration zur Erläuterung einer Regeneration mit der Hauptverbrennung, und Fig. 4 eine Illustration zur Erläuterung einer Regeneration mit einer Nacheinspritzung.

Wie in Figur 4 illustriert, beträgt in der Phase der Nacheinsprizung NI der CO-Gehalt vor dem $NO_x$-Speicherkatalysator 5 nur 0,8 %, während der HC-Gehalt 3000 ppm beträgt. Da HC in dieser Phase das N02, welches vorzugsweise an BaO gebunden ist, $NO_2$ nicht reduziert, sondern zunächst die $O_2$-Speicher, welche vorzugsweise an Pt oder Ce gebunden sind, reduziert. Erst mit Erreichen des Interventionswerts $\lambda_i$ wird die Nacheinspritzung NI gestoppt und der $\lambda_M$-Wert gemäß der oben erläuterten Beziehung ausgehend vom Vorsteuerwert $\lambda_{Reg}$ in Richtung $\lambda = 1$ geregelt.

Dies hat zur Folge, daß in der Phase 2 und 3, in denen geregelt wird, ein CO-Gehalt von 3,5 % und ein HC-Gehalt von 500 ppm vor dem $NO_x$-Speicherkatalysator 5 vorliegt, wie in Fig. 3 verdeutlicht.

Da durch diese Art der Regeneration der $NO_x$-Durchbruch in Phase 1 vermieden werden kann, kann hier der Abschluß der Speicherregeneration noch einfacher durch Verfolgung des Anstiegs des $NO_x$-Signals in Folge der $NH_3$-Querempfindlichkeit des Sensors 10b erfaßt werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere kann beispielsweise die Anpassung des λ-Werts des dem $NO_x$-Speicherkatalysator zugeführten Abgases nicht durch Vergleich mit einem Interventionswert, sondern auch adaptiv unter Einbeziehung vorangegangener Regenerationen geschehen.

## Patentansprüche

1. Verfahren zur Regelung der Gemischzusammensetzung für einen Ottomotor mit $NO_x$-Speicherkatalysator (5) während einer Regenerationsphase, wobei während der Regeneration des NOx-Speicherkatalysators das Lambdasignal nach dem NOx-Katalysator erfasst wird und wobei der λ-Wert ($λ_M$) des dem $NO_x$-Speicherkatalysator (5) zugeführten Abgases im Verlauf der Regenerationsphase auf einen konstanten Vorsteuerwert ($λ_{REG}$) geregelt wird und in Abhängigkeit von dem λ-Wert ($λ_K$) des vom $NO_x$-Speicherkatalysator (5) ausgestoßenen Abgases in Richtung eines Wertes von Eins geregelt wird, wenn der λ-Wert ($λ_K$) des vom $NO_x$-Speicherkatalysator (5) ausgestoßenen Abgases einen vorbestimmten Interventionswert ($λ_i$) unterschreitet.

2. Verfahren nach Anspruch 1, **dadurch gekennzeichnet, dass** die Regelung derart eingerichtet ist, dass der λ-Wert ($λ_K$) des vom $NO_x$-Speicherkatalysator (5) ausgestoßenen Abgases einen Wert von Eins nicht oder nur unwesentlich unterschreitet.

3. Verfahren nach Anspruch 1 oder 2, **dadurch gekennzeichnet, dass d**ie Regenerationsphase eingeleitet wird, wenn der $NO_x$-Gehalt des vom $NO_x$-Speicherkatalysator (5) ausgestoßenen Abgases einen vorbestimmten Wert (TNO) überschreitet.

4. Verfahren nach Anspruch 1, 2 oder 3, **dadurch gekennzeichnet, dass** die Regenerationsphase beendet wird, wenn das Signal eines dem $NO_x$-Speicherkatalysator (5) nachgeschalteten $NO_x$-Sensors (10b) und/oder dessen Steigung (SN) einen vorbestimmten Wert (TNH) überschreitet.

5. Verfahren nach Anspruch 1, 2 oder 3, **dadurch gekennzeichnet, dass** die Regenerationsphase beendet wird, wenn der λ-Wert ($λ_K$) des vom $NO_x$-Speicherkatalysator (5) ausgestoßenen Abgases einen vorbestimmten Wert (Tλ) unterschreitet.

6. Verfahren nach einem der vorherigen Ansprüche, **dadurch gekennzeichnet, dass** der konstante Vorsteuerwert ($λ_{REG}$) dadurch erhalten wird, dass eine vorbestimmte Nacheinspritzung (NI) durchgeführt wird und der λ-Wert der Hauptverbrennung derart geregelt wird, dass der λ-Wert ($λ_M$) des dem $NO_x$-Speicherkatalysator (5) zugeführten Abgases den konstanten Vorsteuerwert ($λ_{REG}$) annimmt.

7. Verfahren nach Anspruch 6, **dadurch gekennzeichnet, dass** die Regelung den λ-Wert ($λ_M$) des dem $NO_x$-Speicherkatalysator (5) zugeführten Abgases nach folgender Beziehung regelt:

$$λ_M = λ_{REG} + k^*(λ_i - λ_K)$$

wobei k eine Konstante, $λ_M$ der λ-Wert der Hauptverbrennung und $λ_K$ der λ-Wert des vom $NO_x$-Speicherkatalysator (5) ausgestoßenen Abgases sind.

## Claims

1. A method of controlling the mixture composition for a spark-ignition engine with a $NO_x$ storage catalyst (5) during a regeneration phase, wherein, during the regeneration of the $NO_x$ storage catalyst, the lambda signal downstream of the $NO_x$ catalyst is detected and wherein the λ value ($λ_M$) of the exhaust gas fed to the $NO_x$ storage catalyst (5) is adjusted to a constant pilot value ($λ_{REG}$) during the regeneration phase and, as a function of the λ value ($λ_K$) of the exhaust gas emitted by the $NO_x$ storage catalyst (5), is adjusted in the direction of a value of one if the $\lambda$ value ($\lambda_K$) of the exhaust gas emitted by the $NO_x$ storage catalyst (5) falls below a predetermined intervention value ($\lambda_i$).

2. A method according to claim 1, **characterised in that** the adjustment is effected so that the $\lambda$ value ($\lambda_K$) of the exhaust gas emitted by the $NO_x$ storage catalyst (5) does not fall below or only marginally falls below a value of one.

3. A method according to claim 1 or 2, **characterised in that** the regeneration phase is initiated if the $NO_x$ content of the exhaust gas emitted by the $NO_x$ storage catalyst (5) exceeds a predetermined value (TNO).

4. A method according to claim 1, 2 or 3, **characterised in that** the regeneration phase is terminated if the signal from a $NO_x$ sensor (10b) arranged downstream of the $NO_x$ storage catalyst (5) and/or its gradient (SN) exceeds a predetermined value (TNH).

5. A method according to claim 1, 2 or 3, **characterised in that** the regeneration phase is terminated if the $\lambda$ value ($\lambda_K$) of the exhaust gas emitted by the $NO_x$ storage catalyst (5) falls below a predetermined value ($T_\lambda$).

6. A method according to any one of the preceding claims, **characterised in that** the constant pilot value ($\lambda_{REG}$) is maintained by preset afterinjection (NI) being carried out and the $\lambda$ value of the main combustion is adjusted so that the $\lambda$ value ($\lambda_M$) of the exhaust gas fed to the $NO_x$ storage catalyst (5) adopts the constant pilot value ($\lambda_{REG}$).

7. A method according to claim 6, **characterised in that** the $\lambda$ value ($\lambda_M$) of the exhaust gas fed to the $NO_x$ storage catalyst (5) is adjusted in accordance with the following relationship:

$$\lambda_M = \lambda_{REG} + k^*(\lambda_i - \lambda_K)$$

in which k is a constant, $\lambda_M$ is the $\lambda$ value of the main combustion and $\lambda_K$ is the $\lambda$ value of the exhaust gas emitted by the $NO_x$ storage catalyst (5).

**Revendications**

1. Procédé de régulation de la composition du mélange pour un moteur à allumage par étincelle avec un catalyseur à accumulation des $NO_x$ (5) pendant un cycle de régénération, le signal lambda étant saisi en aval du catalyseur à $NO_x$ pendant la régénération du catalyseur à accumulation des $NO_x$ et la valeur $\lambda$ ($\lambda_M$) du gaz d'échappement conduit au catalyseur à accumulation des $NO_x$ (5) étant régulée à une valeur pilote ($\lambda_{REG}$) constante au cours du cycle de régénération, et régulée dans le sens d'une valeur de 1 en fonction de la valeur $\lambda$ ($\lambda_K$) du gaz d'échappement évacué par le catalyseur à accumulation des $NO_x$ (5) si la valeur $\lambda$ ($\lambda_K$) du gaz d'échappement évacué par le catalyseur à accumulation des $NO_x$ (5) devient inférieure à une valeur d'intervention ($\lambda_i$) définie.

2. Procédé selon la revendication 1, **caractérisé en ce que** la régulation est agencée de manière à ce que la valeur $\lambda$ ($\lambda_K$) du gaz d'échappement évacué par le catalyseur à accumulation des $NO_x$ (5) ne devienne pas inférieure à une valeur de 1, ou ne devienne que légèrement inférieure à celle-ci.

3. Procédé selon la revendication 1 ou 2, **caractérisé en ce que** le cycle de régénération est démarré si la teneur en $NO_x$ du gaz d'échappement évacué par le catalyseur à accumulation des $NO_x$ (5) dépasse une valeur (TNO) définie.

4. Procédé selon la revendication 1, 2 ou 3, **caractérisé en ce que** le cycle de régénération est terminé si le signal d'un capteur de $NO_x$ (10b) en aval du catalyseur à accumulation des $NO_x$ (5) et/ou la pente (SN) dudit signal dépassent une valeur (TNH) définie.

5. Procédé selon la revendication 1, 2 ou 3, **caractérisé en ce que** le cycle de régénération est terminé si la valeur $\lambda$ ($\lambda_K$) du gaz d'échappement évacué par le catalyseur à accumulation des $NO_x$ (5) devient inférieure à une valeur (T$\lambda$) définie.

6. Procédé selon l'une des revendications précédentes, **caractérisé en ce que** la valeur pilote ($\lambda_{REG}$) constante est

obtenue par exécution d'une post-injection (NI) définie et par régulation de la valeur λ de la combustion principale de telle manière que la valeur λ ($\lambda_M$) du gaz d'échappement conduit au catalyseur à accumulation des $NO_x$ (5) vienne à correspondre à la valeur pilote ($\lambda_{REG}$) constante.

7. Procédé selon la revendication 6, **caractérisé en ce que** la régulation régule la valeur λ ($\lambda_M$) du gaz d'échappement conduit au catalyseur à accumulation des $NO_x$ (5) conformément à la relation suivante :

$$\lambda_M = \lambda_{REG} + k*(\lambda_i - \lambda_K)$$

où k est une constante, $\lambda_M$ la valeur λ de la combustion principale et $\lambda_K$ la valeur λ du gaz d'échappement évacué par le catalyseur à accumulation des $NO_x$ (5).

① $\lambda_M$

② $\lambda_K$

③ $NO_x$

$$\lambda_M = \lambda_{Reg} + k(\lambda_i - \lambda_K)$$

Fig.1

Fig. 2

Lambda →

Zeit [s] →

① $\lambda_M$
NI
② $\lambda_K$

$\Delta\lambda_{NI}$

c[CO] = 3.5%
c[HC] = 500ppm

Fig.3

c[CO] = 0.8%
c[HC] = 3000ppm

Fig.4

Fig.5

Fig.6